# FASCICULE DE BREVET EUROPEEN

(11) **EP 0 327 470 B1**
(45) Date de publication et mention de la délivrance du brevet: **09.06.1993**
(21) Numéro de dépôt: 89400320.1
(22) Date de dépôt: 03.02.1989
(51) Int. Cl.: H02K 1/27, H02K 1/28

(54) **Rotor de machine électrique tournante à aimants permanents de type à concentration de flux**
Läufer einer elektrischen Drehmaschine mit Dauermagneten der Flusskonzentrationsbauart
Rotor of a rotary electric machine with permanent magnets of the flux concentration type

(30) Priorité: 05.02.1988 FR 8801334
(43) Date de publication de la demande: 09.08.1989
(73) Titulaire: Banon, Louis, F-75017 Paris (FR)
(72) Inventeur: Banon, Louis, F-75017 Paris (FR)
(74) Mandataire: Polus, Camille

(56) Documents cités:
- FR-A- 994 928
- FR-A- 1 184 491
- FR-A- 2 266 969
- FR-E- 17 767
- GB-A- 2 075 274
- US-A- 3 242 364
- US-A- 4 336 649
- SIEMENS REVIEW, XLIII, 1976, no. 6, pages 248-254, Erlangen, DE; W. VOLKRODT: "Machines of medium-high rating with a ferrite-magnet field"
- PATENT ABSTRACTS OF JAPAN, vol. 6, no. 123 (E-117)[1001], 8 juillet 1982, page 150 E 117; & JP-A-57 52 335

## Description

L'invention se rapporte à un rotor de machine électrique tournante à aimants permanents de type à concentration de flux, constitué par un arbre d'entraînement présentant une périphérie en matériau magnétique et entouré par des assemblages de pièces polaires ferromagnétiques entre lesquels sont logés des aimants permanents.

Il existe deux types majeurs de moteurs électriques synchrones à aimants permanents et entrefer cylindrique selon la structure de leur rotor :
1) à aimants périphériques,
2) à concentration de flux avec pièces polaires.

Dans le premier cas, l'induction magnétique à l'entrefer est égale à l'induction au droit des aimants. Dans le second cas, l'induction magnétique à l'entrefer est supérieure à l'induction au droit de l'aimant enchassé dans le rotor. De ce fait pour un diamètre d'alésage donné, le flux émanant du rotor est supérieur dans la structure à concentration de flux. On en déduit que, à dimensions externes identiques, un moteur fondé sur la seconde structure aura un couple nominal (ou en régime thermique établi) supérieur au premier. C'est dire l'intérêt que présente cette structure dans les applications d'automatisation de production ou de Services où les utilisateurs requièrent les volumes les plus petits pour la bonne intégration mécanique des moteurs et où souvent également les moteurs sont portés par d'autres axes automatisés.

Cependant, à ce jour, l'offre commerciale de ce type de-moteurs se fait généralement dans le premier type de structure. Cela s'explique par des inconvénients tant techniques qu'économiques de la seconde structure, qui vont être développés :
- la nécessité d'un isolement magnétique au centre du rotor afin d'éviter le court-circuit magnétique de l'aimant sur lui-même ; on utilise ainsi généralement un arbre en acier inoxydable totalement amagnétique, donc cher ;
- l'entraînement mécanique du rotor : dans la première structure, des tôles ou des pièces massives circulaires supportant les aimants peuvent être clavetées sur l'arbre d'entraînement qu'elles entourent ;
   dans la structure à concentration de flux, on ne peut enchasser les aimants dans des pièces polaires circulaires entourant l'arbre sous peine de créer un court-circuit magnétique (cité plus haut) faisant chuter les performances de couple de façon importante, d'où la nécessité d'avoir recours à des joues d'extrémités du rotor solidaires de l'arbre d'entraînement et des pièces polaires, par l'intermédiaire de goujons, ce qui constitue un dispositif mécanique complexe d'assemblage long et difficile. De plus, le guidage axial précis des pièces polaires et des aimants, nécessaire à de bonnes performances en asservissement, ne peut être assuré que par des moyens de montage externes ;
- la mauvaise fiabilité à haute vitesse : les pièces polaires n'étant pas solidaires de l'arbre peuvent se centrifuger à haute vitesse, touchant ainsi le stator.

Ainsi le document GB-A-2 075 274 divulgue un rotor de machine électrique tournante à aimants permanents de type à concentration de flux constitué par un arbre d'entraînement entouré par des assemblages de pièces polaires ferro-magnétiques présentant d'une part des tenons d'accouplement engagés dans les rainures de la périphérie de l'arbre, des aimants permanents étant logés entre lesdits assemblages de pièces polaires.

L'objet de la présente invention est d'éviter les inconvénients précédemment cités grâce à un rotor du type à concentration de flux dont les pièces polaires sont solidarisées à l'arbre par des liaisons mécaniques.

A cet effet, l'invention propose un rotor de machine électrique tournante à aimants permanents de type à concentration de flux constitué par un arbre d'entraînement entouré par des assemblages de pièces polaires ferro-magnétiques présentant d'une part des tenons d'accouplement engagés dans les rainures de la périphérie de l'arbre, des aimants permanents étant logés entre lesdits assemblages de pièces polaires, caractérisé par le fait que les rainures sont ménagées dans une douille en matériau amagnétique traversée par l'arbre d'entraînement dont elle est solidaire et que les pièces polaires présentent des portées d'appui cylindriques au contact de portées intercalaires cylindriques de la douille.

Nous allons maintenant décrire deux modes de réalisation préférentiels de l'invention.

La figure 1 représente une coupe longitudinale et la figure 2 une coupe transversale, selon BB d'un moteur équipé du rotor selon l'invention, dans lequel l'entraînement mécanique du rotor est effectué par un procédé de clavetage de l'arbre.

La figure 3 représente une coupe longitudinale et la figure 4 une coupe transversale selon BB d'un moteur équipé du rotor selon l'invention dans lequel l'entraînement mécanique du rotor est effectué par un procédé de molletage de l'arbre.

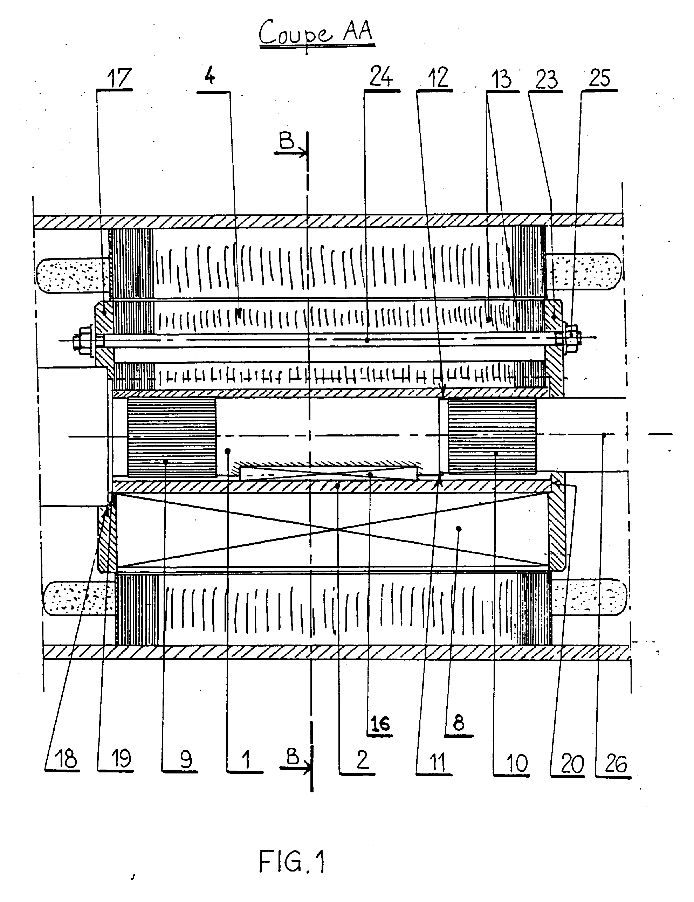

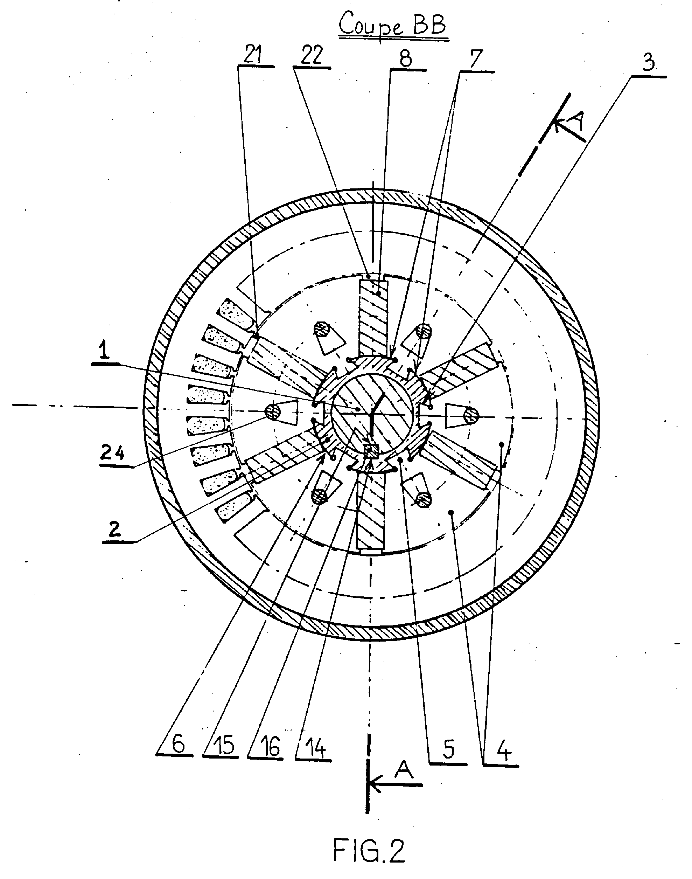

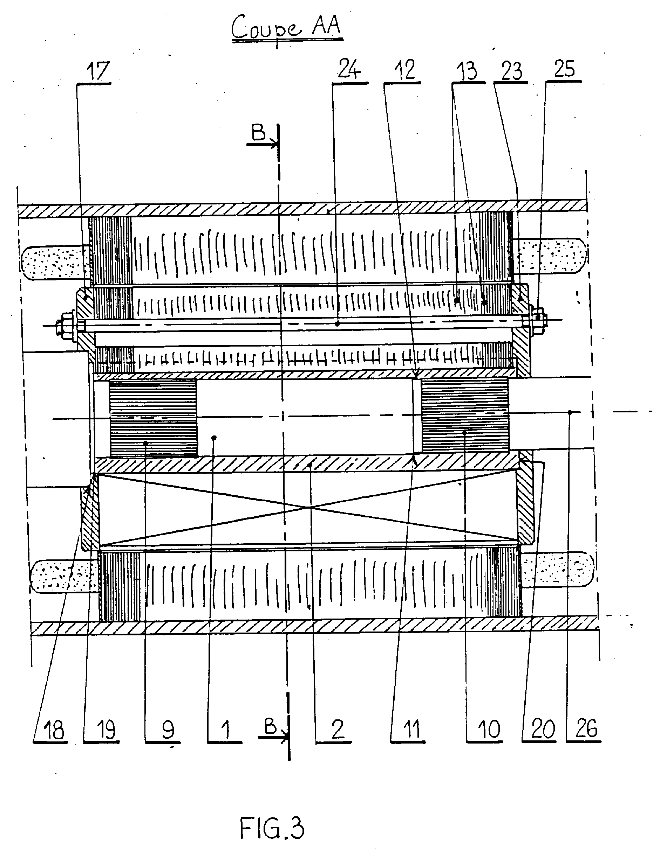

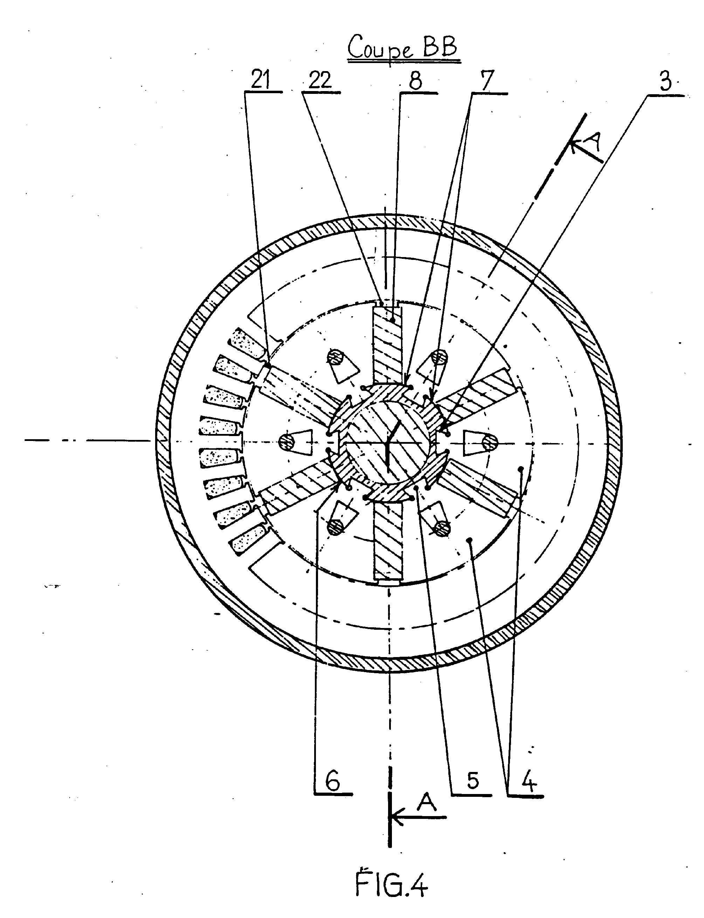

Dans les rotors selon l'invention illustrés par les figures 1 et 2 d'une part, et les figures 3 et 4 d'autre part, les différences proviennent seulement du dispositif d'accouplement de l'arbre d'entraînement 1 et de la douille en matériau amagnétique 2 qui seront décrits ultérieurement.

Le dispositif selon l'invention comporte un arbre d'entraînement 1, notamment en acier ferro-magnétique pour un prix de revient bas, solidaire par sa surface périphérique d'une douille en matériau amagnétique 2 comportant sur sa surface périphérique des rainures de maintien semi-fermées 3 s'étendant parallèlement à l'axe de révolution 26 et dont le nombre est égal au nombre de pôles magnétiques de la machine électrodynamique synchrone. Les rainures semi-fermées 3 sont réparties de façon équidistante à la périphérie de la douille en matériau amagnétique 2. Les rainures semi-fermées 3 s'ouvrent à la périhérie de la douille en matériau magnétique 2 et sont séparées par des portées intercalaires 7 de nombre égal au nombre de pôles magnétiques de la machine électrodynamique synchrone, formant des fractions de surface cylindrique dont l'axe est l'axe (26).

La douille en matériau amagnétique (2) est solidaire des pièces polaires ferromagnétiques (4) dont le nombre est égal au nombre de pôles de la machine synchrone, la solidarité étant assurée par des tenons d'accouplement (5) situés à l'extrêmité intérieure de chaque pièce polaire ferromagnétique (4), la forme des tenons d'accouplement (5) correspondant à la forme des rainures semi-fermées (3) dans lesquelles ils sont logés sans jeu. La forme des rainures semi-fermées (3) et des tenons d'accouplement (5) peut être notamment représentative d'une queue d'aronde. Afin d'éviter tout basculement de la pièce polaire ferromagnétique (4), les pièces polaires ferromagnétiques (4) comportent, s'étendant de part et d'autre à la base des tenons d'accouplement (5), des portées d'appui (6) dont l'axe de révolution est l'axe (26) coopérant avec les portées intercalaires (7) de la douille en matériau amagnétique (2) situées en vis-à-vis.

La douille en matériau amagnétique (2) peut être notamment obtenue pour un prix de revient bas par opérations de tournage et de brochage pour la réalisation des rainures semi-fermées (3) ; les rainures semi-fermées (3) parvenant à au moins une des deux extrémités (19) ou (20) de la douille en matériau amagnétique (2) afin que les tenons d'accouplement (5) des pièces polaires ferromagnétiques (4) puissent être introduits par cette extrêmité.

Les pièces polaires ferromagnétiques (4) sont notamment constituées selon l'axe (26) par un empilement de tôles (13) introduites par l'une des deux extrémités (19) ou (20) de la douille en matériau amagnétique (2).

L'arbre d'entraînement (1) peut être notamment muni d'un épaulement (18) sur lequel s'appuie le capot d'extrêmité (17) permettant ainsi l'indexation selon l'axe (26) du rotor par rapport au stator.

De nombreux dispositifs de serrage selon l'axe (26) de l'ensemble rotorique peuvent être pratiqués, notamment par goujons traversants (24) et écrous de serrage axial (25) faisant pression sur deux capots d'extrêmités (17) et (23).

Un collage selon l'axe (26) des pièces polaires ferromagnétiques peut suffire dans certains cas. Les aimants parallélépipèdiques (8) sont logés dans les encoches (22) réalisées par deux pièces polaires ferromagnétiques (4) consécutives munies notamment à leur périphérie d'ergots de maintien (21), les aimants parallélépipèdiques (8) étant collés aux pièces polaires ferromagnétiques (4). Les aimants (8) reposent par une génératrice sur les portées cylindriques (7) situées entre les rainures (3).

Les figures (1) et (2) présentent un dispositif préférentiel selon l'invention de solidarisation de l'arbre d'entraînement (1) et de la douille en matériau amagnétique (2).

L'arbre d'entraînement (1) est muni d'un rainure (15) effectuée selon l'axe (26) recevant une clavette (16) dont la partie supérieure est logée dans la rainure (14) pratiquée dans la surface intérieure de la douille en matériau amagnétique (2).

Les figures (3) et (4) présentent un autre dispositif préférentiel selon l'invention pour solidariser l'arbre d'entraînement (1) et la douille en matériau amagnétique (2). L'arbre d'entraînement (1) est muni de deux zones périphériques de molletage (9) et (10) pratiqués sur des côtes radiales différentes de l'arbre d'entraînement du fait de la présence de l'épaulement radial (11). La douille en matériau amagnétique (2) est pourvue sur sa surface intérieure d'un épaulement radial (12) de même épaisseur radiale que l'épaulement radial (11) aux tolérances de fabrication près, l'épaulement radial (12) séparant deux surfaces cylindriques coopérant avec l'arbre d'entraînement (1) et solidaires des zones de molletage (9) et (10).

Le dispositif de molletage décrit par les figures (3) et (4) permet l'introduction de la douille amagnétique (2) par l'extrêmité de plus faible diamètre de l'arbre d'entraînement (1), la solidarisation de l'arbre d'entraînement (1) et de la douille en matériau amagnétique (2) étant obtenue par emmanchement à force.

## Revendications

1. Rotor de machine électrique tournante à aimants permanents de type à concentration de flux constitué par un arbre d'entraînement (1) entouré par des assemblages de pièces polaires ferro-magnétiques (4) présentant d'une part des tenons d'accouplement (5) engagés dans les rainures (3) de la périphérie de l'arbre (1), des aimants permanents (8) étant logés entre les dits assemblages de pièces polaires (4) caractérisé par le fait que les rainures (3) sont ménagées dans une douille en matériau amagnétique (2) traversée par l'arbre d'entraînement (1) dont elle est solidaire et que les pièces polaires (4) présentent des portées d'appui cylindriques (6) au contact de portées intercalaires (7) cylindriques de la douille (2).

2. Rotor selon la revendication 1 caractérisé par le fait que les aimants (8) sont parallélépipédiques.

3. Rotor selon l'une quelconque des revendications précédentes caractérisé par le fait que les rainures semi-fermées (3) et les tenons d'accouplement (5) sont en forme de queue d'aronde.

4. Rotor selon l'une quelconque des revendications précédentes caractérisé par le fait que l'accouplement mécanique de l'arbre d'entraînement (1) et de la douille amagnétique (2) est réalisé par un molletage effectué sur l'arbre d'entraînement (1) coopérant avec la surface intérieure de la douille en matériau amagnétique (2) emmanchée à force sur l'arbre d'entraînement (1).

5. Rotor selon l'une quelconque des revendications précédentes, caractérisé en ce que l'arbre d'entraînenemt (1) comporte sur sa surface périphérique coopérant avec la douille en matériau amagnétique (2), deux zones de molletage (9) et (10) effectuées sur des côtes radiales rendues différentes par la présence de l'épaulement radial (11) séparant les zones de molletage (9) et (10), la douille (2) comportant sur sa surface intérieure coopérant avec l'arbre d'entraînement (1) un épaulement radial (12) séparant la surface intérieure de la douille (2) en deux parties solidaires des zones de molletage (9) et (10).

6. Rotor selon les revendications 1 à 3 caractérisé en ce que l'accouplement mécanique de l'arbre d'entraînement (1) et de la douille en matériau amagnétique (2) est effectué au moyen d'une clavette (16) coopérant avec la rainure (14) pratiquée sur la surface intérieure de la douille en matériau amagnétique (2) et la rainure (15) située sur la surface extérieure de l'arbre d'entraînement (1).

7. Rotor selon l'une quelconque des revendications précédentes caractérisé par le fait qu'un capot d'extrêmité (17) du rotor coopère avec un épaulement (18) de l'arbre d'entraînement (1) constituant une butée d'indexation du rotor par rapport au stator de la machine électrique tournante, selon l'axe (26).

## Patentansprüche

1. Läufer einer elektrischen Drehkraftmaschine mit Dauermagneten in Flußkonzentrationsbauart, bestehend aus einer Antriebswelle (1), umgeben von Anordnungen ferromagnetischer Polshuhe (4), die auf einer Seite in Rillen (3) am Umfang der Welle (1) eingreifende Verbindungszapfen (5) aufweisen, wobei Dauermagnete (8) zwischen den Polschuhanordnungen (4) angebracht sind,
**dadurch gekennzeichnet,**
daß die Rillen (3) in einer Hülse aus nichtmagnetischem Material (2) angebracht sind, wobei die Antriebswelle (1), die mit der Hülse (2) fest verbunden ist, durch diese hindurchverläuft, und daß die Polschuhe (4) zylindrische Auflageflächen (6) aufweisen, die zwischenliegende zylindrische Auflageflächen (7) der Hülse (2) berühren.

2. Läufer nach Anspruch 1,
dadurch gekennzeichnet,
daß die Magnete (8) quaderförmig sind.

3. Läufer nach einem der vorherigen Ansprüche,
dadurch gekennzeichnet,
daß die halbgeschlossenen Rillen (3) und die Verbindungszapfen (5) schwalbenschwanzförmig sind.

4. Läufer nach einem der vorherigen Ansprüche,
dadurch gekennzeichnet,
daß die mechanische Verbindung der Antriebswelle (1) und der nichtmagnetischen Hülse (2) durch eine Rändelung der Antriebswelle (1) erreicht wird, die mit der Innenseite der Hülse aus nichtmagnetischen Material (2) zusammenwirkt, die auf die Antriebswelle (1) aufgepreßt ist.

5. Läufer nach einem der vorhergehenden Ansprüche,
dadurch gekennzeinchnet,
daß die Antriebswelle (1) auf ihrer mit der Hülse aus nichtmagnetischen Material (2) zusammenwirkenden Außenfläche zwei gerändelte Bereiche (9) und (10) umfaßt, die bei Radien ausgeführt sind, die sich aufgrund der Anwesenheit einer radialen Schulter (11), die die gerändelten Bereiche (9) und (10) trennt, untersheiden, wobei die Hülse (2) an ihrer mit der Antriebswelle (1) zusammenwirkenden Innenfläche eine radiale Schulter (12) aufweist, die die Innenfläche der Hülse (2) in zwei mit den gerändelten Bereichen (9) und (10) fest verbundene Bereiche trennt.

6. Läufer nach einem der Ansprüche 1 bis 3,
dadurch gekennzeichnet,
daß die mechanische Verbindung der Antriebswelle (1) und der Hülse aus nichtmagnetischem Material (2) mit einem Befestigungskeil (16) durchgeführt wird, der mit der in der Innenfläche der Hülse aus nichtmagnetischem Material (2) angebrachten Rille (14) und der auf der Außenseite der Antriebswelle (1) liegenden Rille (15) zusammenwirkt.

7. Läufer nach einem der vorhergehenden Ansprüche,
dadurch gekennzeichnet,
daß eine Endabdeckung (17) des Läufers mit einer Schulter (18) der Antriebswelle (1) zusammenwirkt, um einen Indexierungsanchlag des Läufers bezüglich des Ständers der elektrischen Drehkraftmaschine entlang der Achse (26) zu bilden.

## Claims

1. Rotor for a rotary electrical machine with permanent magnets of the flux concentration type consisting of a drive shaft (1) surrounded by assemblies of ferromagnetic pole pieces (4) having on the one hand connecting lugs (5) engaged in the grooves (3) on the periphery of the shaft (1), permanent magnets (8) being housed between the said assemblies of pole pieces (4), characterised by the fact that the grooves (3) are provided in a sleeve (2) made from non-magnetic material, through which the drive shaft (1) passes and to which it is fixed, and in that the pole pieces (4) have cylindrical bearing surfaces (6) in contact with interposed cylindrical bearing surfaces (7) on the sleeve (2).

2. Rotor according to Claim 1, characterized by the fact that the magnets (8) are parallelepipedal.

3. Rotor according to either one of the preceding claims, characterised by the fact that the semi-closed grooves (3) and the connecting lugs (5) are in the form of dovetails.

4. Rotor according to any one of the preceding claims, characterised by the fact that the mechanical connection of the drive shaft (1) and non-magnetic sleeve (2) is effected by means of knurling on the drive shaft (1) interacting with the internal surface of the sleeve made from non-magnetic material (2), which is a push fit on the drive shaft (1).

5. Rotor according to any one of the preceding claims, characterised in that the drive shaft (1) has, on its peripheral surface interacting with the sleeve made from magnetic material (2) two knurled zones (9) and (10) made on radial slopes made different by the presence of the radial shoulder (11) separating the kurled zones (9) and (10), the sleeve (2) having, on its internal surface interacting with the drive shaft (1), a radial shoulder (12) separating the internal surface of the sleeve (2) into two parts fixed to the knurled zones (9) and (10).

6. Rotor according to Claims 1 to 3, characterised in that the mechanical connection of the drive shaft (1) and the sleeve (2) made from non-magnetic material is effected by means of a key (16) interacting with the groove (14) made on the internal surface of the sleeve (2) made from non-magnetic material and the groove (15) situated on the external surface of the drive shaft (1).

7. Rotor according to any one of the preceding claims, characterised by the fact that an end cap (17) on the rotor interacts with a shoulder (18) on the drive shaft (1) constituting an indexing stop for the rotor with respect to the stator of the rotary electrical machine, along the axis (26).
